Europäisches Patentamt

European Patent Office

Office européen des brevets

(11) Veröffentlichungsnummer: **0 270 479 B1**

(12) **EUROPÄISCHE PATENTSCHRIFT**

(45) Veröffentlichungstag der Patentschrift: **06.05.92**

(21) Anmeldenummer: **87730118.4**

(22) Anmeldetag: **30.09.87**

(51) Int. Cl.⁵: **G02B 6/44**

(54) **Spleisskassettengehäuse für Lichtwellenleiter.**

(30) Priorität: **29.11.86 DE 3640836**

(43) Veröffentlichungstag der Anmeldung:
**08.06.88 Patentblatt 88/23**

(45) Bekanntmachung des Hinweises auf die
Patenterteilung:
**06.05.92 Patentblatt 92/19**

(84) Benannte Vertragsstaaten:
**AT BE CH DE ES FR GB GR IT LI LU NL SE**

(56) Entgegenhaltungen:
**EP-A- 0 146 478**
**EP-A- 0 182 494**
**DE-A- 2 651 080**
**DE-A- 2 950 833**
**DE-A- 3 133 586**

(73) Patentinhaber: **KRONE Aktiengesellschaft**
**Beeskowdamm 3-11**
**W-1000 Berlin 37(DE)**

(72) Erfinder: **Biederstedt, Lutz**
**Breisgauerstrasse 35**
**W-1000 Berlin 38(DE)**
Erfinder: **Gerke, Dieter**
**Allmendeweg 7**
**W-1000 Berlin 37(DE)**
Erfinder: **Sander, Claus**
**Fechnerstrasse 14**
**W-1000 Berlin 31(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die Erfindung bezieht sich auf ein Spleißkassettengehäuse für Lichtwellenleiter gemäß dem Oberbegriff des Anspruchs 1.

Spleißkassettengehäuse dieser Art sind aus der DE-A 3 413 401 oder der DE-A-3 133 586 vorbekannt. Bei dem Gehäuse der DE-A-3 413 401 sind die Lichtwellenleiter-Kabel nahe der beiden Längsseitenwände des Gehäuses durch Durchbrüche in einer Stirnwand des Gehäuses zugeführt. Innerhalb des Gehäuses sind die einzelnen Lichtwellenleiter der ankommenden und abgehenden Lichtwellenleiter-Kabel über Spleißstellen miteinander verbunden, die in einer Spleißhalterung gelagert sind. Die Lichtwellenleiter sind hierzu an die Innenflächen der Seitenwände angelegt. An den Seitenwänden sind nach innen ragende, laschenartige Niederhalter für die Lichtwellenleiter angeformt. Zum Wiederholen eines Spleißvorganges, zu welchem eine Reservelänge der einzelnen Lichtwellenleiter im Gehäuse gelagert sein muß, muß das Spleißkassettengehäuse von einem Installationsplatz zu einem Spleißplatz verbracht werden. Hierzu muß auch eine Reservelänge der dem Gehäuse zugeführten Lichtwellenleiter-Kabel vorhanden sein.

Nachteilig beim bekannten Spleißkassettengehäuse ist hierbei, daß durch die beiden dem Gehäuse getrennt zugeführten ankommenden und abgehenden Lichtwellenleiter-Kabel die Bewegbarkeit des Spleißkassettengehäuses beim Verbringen eingeschränkt ist. Ferner besteht bei unsachgemäßer Behandlung des Spleißkassettengehäuses mit den diesem zugeführten Lichtwellenleiter-Kabeln die Gefahr, daß diese mechanisch beschädigt werden. Dies kann z. B. durch Unterschreiten des zulässigen Mindestbiegeradius erfolgen.

Der Erfindung liegt von daher die Aufgabe zugrunde, ein Spleißkassettengehäuse der gattungsgemäßen Art zu schaffen, welches ohne wesentliche Einschränkung der Bewegungsfreiheit und ohne die Gefahr des Bruches einzelner Lichtwellenleiter der Lichtwellenleiter-Kabel von einem Installationsplatz zu einem Spleißplatz und umgekehrt bewegbar ist.

Die Lösung dieser Aufgabe ergibt sich aus den kennzeichnenden Merkmalen des Anspruches 1. Durch die Zuführung der ankommenden und abgehenden Lichtwellenleiter-Kabel in einer gemeinsamen Achse wird eine uneingeschränkte Beweglichkeit des Spleißkassettengehäuses gewährleistet, das somit leicht und ohne die Gefahr des Bruches einzelner Lichtwellenleiter der ankommenden und abgehenden Lichtwellenleiter-Kabel vom Installationsplatz zum Spleißplatz und umgekehrt verbracht werden kann. Um bei der Zuführung der Lichtwellenleiter-Kabel in einer gemeinsamen Achse dennoch zu erreichen, daß die freien Enden der einzelnen Lichtwellenleiter zur Bildung der Spleiße gegeneinanderstoßen, d. h. aus unterschiedlichen Zuführungsrichtungen kommen, ist ferner erfindungsgemäß im Boden des Gehäuses der nutartige Führungskanal vorgesehen, welcher eine Richtungsänderung des einen Lichtwellenleiter-Kabels um 180° bewirkt, so daß bereits bei Aufteilung der Lichtwellenleiter-Kabel in die einzelnen Lichtwellenleiter eine gegenläufige Verlaufsrichtung der ankommenden und abgehenden Lichtwellenleiter gegeben ist.

Der nutartige Führungskanal kann auf der Innenseite des Gehäusebodens oder auf dessen Außenseite angeordnet sein, wobei im letzteren Fall im Gehäuseboden eine Durchgangsöffnung zur Durchführung der Lichtwellenleiter-Kabel ausgebildet ist. In besonders bevorzugter Weise sind die gemeinsam in einer Achse zugeführten ankommenden und abgehenden Lichtwellenleiter-Kabel von einem flexiblen Metallschlauch eingehüllt, um so die Einhaltung des Mindestbiegeradius der Lichtwellenleiter zu gewährleisten.

Weitere vorteilhafte Ausgestaltungen der Erfindung ergeben sich aus den Unteransprüchen. Hierbei wird insbesondere auf die vorteilhafte Lagerung der einzelnen Lichtwellenleiter in Kunststofftaschen hingewiesen.

Insgesamt ergeben sich bei Verwendung des erfindungsgemäßen Spleißkassettengehäuses folgende Vorteile:

Beim Herausnehmen des Spleißkassettengehäuses aus einem Installationsplatz, z. B. einem Muffengehäuse, sind die ankommenden und abgehenden Lichtwellenleiter-Kabel und damit deren einzelne Lichtwellenleiter bzw. Glasfasern vor mechanischen Beschädigungen geschützt, da die Kabel durch den Einsatz des flexiblen Metallschlauches, der sich nicht unter den Mindestbiegeradius der Glasfasern biegen läßt, geschützt sind. Somit wird das Unterschreiten des vorgeschriebenen Mindestbiegeradius beim Herausnehmen des Spleißkassettengehäuses zuverlässig verhindert.

Durch die separate Lagerung der einzelnen zusammengehörenden Lichtwellenleiter bzw. Glasfasern und deren Spleiße können diese gezielt aufgefunden und dem Gehäuse entnommen werden, wobei es keinerlei Schwierigkeiten bereitet, gezielt nur eine ganz bestimmte Spleißstelle zu entnehmen.

Eines der Lichtwellenleiter-Kabel, entweder das ankommende oder das abgehende Kabel, wird bei Einführung in das Gehäuse zur Richtungsänderung in den in Form einer "9" ausgebildeten, nutartigen Führungskanal eingelegt, um eine Richtungsänderung um 180° zu erreichen. Da bei der Ausbildung des Führungskanals der Mindestbiegeradius für die Glasfasern eingehalten wird, entstehen keine unzulässig kleinen Biegeradien.

Die Erfindung ist nachfolgend anhand eines in den Zeichnungen näher dargestellten Ausführungsbeispieles eines Spleißkassettengehäuses näher erläutert.

Es zeigen:

Fig. 1 Eine perspektivische Darstellung des Gehäuses mit abgehobenem Gehäusedeckel,

Fig. 2 eine Untersicht des Gehäuses und

Fig. 3 einen Schnitt durch das Gehäuse gemäß der Linie III-III in Fig. 2.

Das Spleißkassettengehäuse für Lichtwellenleiter besteht aus einem kastenartigen Gehäuse-Unterteil 1 und einem dieses verschließenden Gehäusedeckel 2. In den Gehäuseraum 3 sind sechs Taschen 4 aus Kunststoff eingelegt, welche einseitig durch druckknopfartige Befestigungselemente 5 im Gehäuseraum 3 lösbar festgelegt sind. Auf der Außenseite des Gehäusebodens 6 werden innerhalb eines flexiblen Schlauches 7 die ankommenden und abgehenden Lichtwellenleiter-Kabel 8, 9 geführt, welche mittels einer Klemme 10 am Gehäuseboden 6 festgelegt sind.

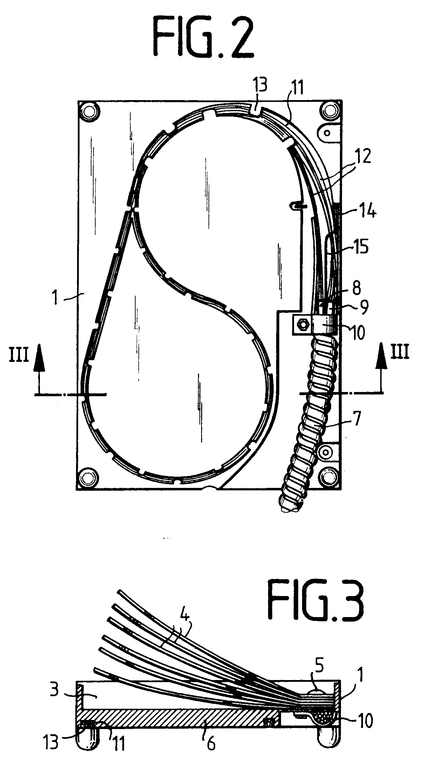

Auf der Außenseite des Gehäusebodens 6 ist ein nutartiger Führungskanal 11 eingelassen, der in Form einer "9" ausgebildet ist, wie es insbesondere Fig. 2 zeigt. In diesen nutartigen Führungskanal 11 sind die Lichtwellenleiter bzw. Glasfasern 12 des ankommenden Lichtwellenleiter-Kabels 8 eingelegt, wobei in Abständen voneinander auf beiden Innenseiten des nutartigen Führungskanals 11 nokkenartige Niederhalter 13 angeformt sind, welche die Lichtwellenleiter 12 gegen ein Herausfallen aus dem nutartigen Führungskanal 11 sichern. Nach einer Richtungsänderung um 180° verlassen die ankommenden Lichtwellenleiter 12 wieder den Führungskanal 11 in genau entgegengesetzter Richtung zu den Lichtwellenleitern bzw. Glasfasern 14 des abgehenden Lichtwellenleiter-Kabels 9.

Zur Überführung der Lichtwellenleiter 14 des abgehenden Lichtwellenleiter-Kabels 9 und der Lichtwellenleiter 12 des ankommenden Lichtwellenleiter-Kabels 8 ist im Gehäuseboden 6 eine Durchgangsöffnung 15 ausgebildet, so daß die auf der Unterseite des Gehäusebodens 6 zugeführten Lichtwellenleiter 12, 14 in den Gehäuseraum 3 überführt werden.

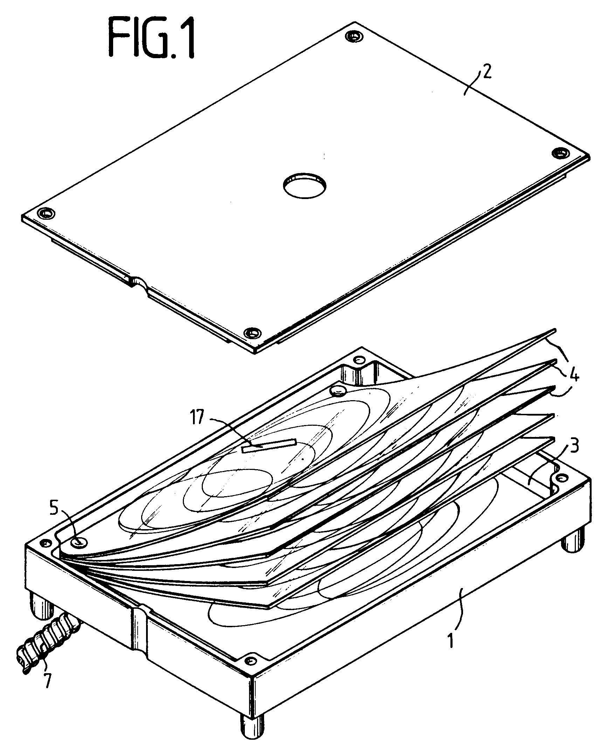

Im Gehäuseraum 3 sind die einzelnen, jeweils zueinander gehörigen Lichtwellenleiter bzw. Glasfasern 12, 14 in je einer Tasche 4 aus Kunststoff aufgenommen und durch eine Spleißstelle 17 miteinander verbunden. Beide Längsseiten der Taschen 4 sind offen, jedoch kann die eine Taschenlängsseite mittels einer nicht näher dargestellten Lasche verschließbar ausgebildet sein. Durch die beschriebene Anordnung und Befestigung der Taschen 4 mittels Verbindungselementen 5 sind die Taschen 4 fächerartig aufklappbar im Gehäuseraum 3 gelagert, wie es in den Figuren 1 und 3 dargestellt ist. Die Taschen 4 sind aus Kunststoff-Folien gebildet.

Der flexible Schlauch 7, der das Spleißkassettengehäuse z. B. mit einem Muffengehäuse verbindet, dient dem mechanischen Schutz der ankommenden und abgehenden Lichtwellenleiterkabel 8 bzw. 9. Der Schlauch 7 besteht aus einer Wendel, insbesondere aus Metallblech, deren Metallblechstreifen entlang seiner wendelförmigen Seitenkanten miteinander beweglich durch Falzen verbunden ist. Somit kann der Schlauch 7 nur bis zu einem vorgegebenen Mindestbiegeradius gebogen werden, der gleich oder größer ist als der zulässige Mindestbiegeradius der Lichtwellenleiterkabel 8, 9. Der Schlauch 7 kann auch aus anderen Werkstoffen, insbesondere Kunststoff, hergestellt sein. Die Innenwände müssen so beschaffen sein, daß sich die Lichtwellenleiterkabel 8,9 ein- und durchführen lassen. Die Wandstärke sollte möglichst gering sein. Der Schlauch 7 soll oberhalb seines Mindestbiegeradius leicht biegbar sein.

Liste der Bezugzeichen :

| | |
|---|---|
| 1 | Gehäuseunterteil |
| 2 | Gehäusedeckel |
| 3 | Gehäuseraum |
| 4 | Tasche |
| 5 | Befestigungselement |
| 6 | Gehäuseboden |
| 7 | Flexibler Schlauch |
| 8 | ankommende Lichtwellenleiter-Kabel |
| 9 | abgehende Lichtwellenleiter-Kabel |
| 10 | Klemme |
| 11 | Führungskanal |
| 12 | Lichtwellenleiter |
| 13 | Niederhalter |
| 14 | Lichtwellenleiter |
| 15 | Durchgangsöffnung |
| 17 | Spleißstelle |

**Patentansprüche**

1. Spleißkassettengehäuse für Lichtwellenleiter mit einem Gehäuseraum zur Aufnahme der einzelnen Lichtwellenleiter und deren Spleiße und mit einer gemeinsamen Kabelzuführung für das ankommende und abgehende Lichtwellenleiterkabel und mit einem Gehäuseboden, dadurch gekennzeichnet, daß auf der Außenseite des Gehäusebodens (6) eine Umkehrschleife im Form eines nutartigen Führungskanals (11) zur Richtungsänderung eines der beiden Lichtwellenleiterkabel (8 oder 9) um 180 Grad vorgesehen ist, daß im Gehäuseboden (6) eine Durchgangsöffnung (15) zur Durchführung der Lichtwellenleiter (12, 14) der beiden Lichtwellenleiter-Kabel (8 und 9) von der Außenseite des Gehäusebodens (6) zum Gehäuseraum (3) ausgebildet ist, und daß innerhalb des Gehäuseraums (3) übereinander angeordnete Taschen (4) zur Aufnahme der Reservelängen der Lichtwellenleiter (12, 14) und deren Spleißstellen (17) vorhanden sind.

2. Gehäuse nach Anspruch 1,
dadurch gekennzeichnet,
daß ein flexibler Schlauch (7) zur Aufnahme der ankommenden und abgehenden Lichtwellenleiter (8, 9) in der gemeinsamen Zuführung zwecks Einhaltung eines Mindestbiegeradius vorgesehen ist.

3. Gehäuseanspruch 1,
dadurch gekennzeichnet,
daß beide Längsseiten der Taschen (4) offen sind und daß eine Taschenlängsseite mittels einer Lasche verschließbar ist.

4. Gehäuse nach den Ansprüchen 1 und 3,
dadurch gekennzeichnet,
daß die Taschen (4) an einer Längsseite Einrichtungen (5) zur Befestigung am Gehäuseboden (6) des Gehäuseraumes (3) aufweisen und daß die Taschen (4) fächerartig aufklappbar gelagert sind.

5. Gehäuse nach den Ansprüchen 1, 3 und 4,
dadurch gekennzeichnet,
daß die Taschen (4) aus Kunststoff-Folien gebildet sind.

## Claims

1. A splice cartridge case for light wave guides comprising a case interior for receiving the individual light wave guides and the splices thereof, and comprising a common cable feeding position for the incoming and outgoing light wave guide cable, and comprising a case bottom., **characterized by that** on the outside of the case bottom (6) a reversing loop in the form of a groove-type guide channel (11) for changing the direction of the one of two light wave guide cables (8 or 9) by 180° is provided, that in the case bottom (6), a through-opening (15) for passing the light wave guides (12, 14) of the two light wave guide cables (8 and 9) through from the outside of the case bottom (6) to the case interior (3) is adapted, and that within the case interior (3), pockets (4) arranged on top of each other for receiving the spare lengths of the light wave guides (12, 14) and the splice positions (17) thereof is provided.

2. A case according to claim 1, **characterised by that** a flexible hose (7) is provided for receiving the incoming and outgoing light wave guides (8, 9) in the common feeding portion for observing a minimum bending radius.

3. A case according to claim 1, **characterised by that** both longitudinal sides of the pockets (4) are open, and that one longitudinal pocket side can be closed by means of a lug.

4. A case according to claim 1, **characterised by that** the pockets (4) comprise, at one longitundinal side, devices (5) for fixing at the case bottom (6) of the case interior (3) and that the pockets (4) can be folded up in fan-type manner.

5. A case according to claims 1 and 2, **characterised by that** the pockets (4) are formed of plastic foils.

## Revendications

1. Enveloppe de cassette à épisser pour guides d'ondes lumineuses, comprenant un intérieur de l'enveloppe pour loger les guides d'ondes lumineuses individuels et les épissures de ceux-ci, et comprenant une amenée commune pour les câbles de guide d'ondes lumineuses d'entrée et de sortie, et comprenant un fond de l'enveloppe, **caractérisée en ce que** sur la surface extérieure du fond de l'enveloppe (6), un lacet d'inversion en forme d'un canal de guidage (11) en forme d'une rainure pour changer la direction d'un des deux câbles de guide d'ondes lumineuses (8 ou 9) par 180° est prevu, que dans le fond de l'enveloppe (6), une cuverture de passage (15) pour passer les guides d'ondes lumineuses (12, 14) des deux câbles de guide d'ondes lumineuses (8 et 9) de l'extérieur du fond de l'enveloppe (6) jusqu'à l'intérieur de l'enveloppe (3) est agencée et qu'au-dedans de l'intérieur de l'enveloppe (3), des poches (4) disposées l'une au-dessus de l'autre pour loger les guides d'ondes lumineuses (12, 14) et des épissures de ceux-ci sont présentes.

2. Enveloppe selon la revendication 1, **caractérisée en ce qu'** un tuyau flexible (7) pour loger les guides d'ondes lumineuses d'entrée et de sortie (8, 9) dans une commune amenée est prevu pour observer un rayon de courbure minimal.

3. Enveloppe selon la revendication 1, **caractérisée en ce que** les deux côtés longitudinaux des poches (4) sont ouverts, et qu'un côté longitudinal des poches peut être fermé au moyen d'une languette.

4. Enveloppe selon les revendications 1 et 3, **caractérisée en ce que** les poches (4) comportent, à un côté longitudinal, des dispositifs (5) pour fixation au fond de l'enveloppe (6) de l'intérieur de l'enveloppe (3), et que les poches (4) peuvent être dépliées en éventail.

5. Enveloppe selon les revendications 1, 3 et 4, **caractérisée en ce que** les poches (4) sont formées de feuilles en plastique.

FIG.1

# FIG.2

# FIG.3